# EUROPEAN PATENT SPECIFICATION

(11) **EP 1 846 164 B1**
(45) Date of publication and mention of the grant of the patent: **02.05.2018**
(21) Application number: 05855080.7
(22) Date of filing: 22.12.2005
(51) Int. Cl.: C12M 1/34, C12Q 1/68

(54) **EVIDENCE COLLECTION HOLDER FOR SAMPLE AUTOMATION**
HALTER ZUR NACHWEISENTNAHME FÜR PROBEAUTOMATISIERUNG
SUPPORT DE COLLECTE DE PREUVES POUR TRAITEMENT AUTOMATISE D'ECHANTILLONS

(30) Priority: 25.01.2005 US 42527; 28.04.2005 US 117502
(43) Date of publication of application: 24.10.2007
(73) Proprietor: The Bode Technology Group, Inc, Lorton, VA 22079 (US); Sangha, Jangbir S., Overland Park KS 66209 (US)
(72) Inventor: SANGHA, Jangbir, S., Overland Park, KS 66209 (US)
(74) Representative: Richards, John
(86) International application number: PCT/US2005/046458
(87) International publication number: WO 2006/081021

(56) References cited:
- EP-A- 0 269 362
- WO-A-85/02466
- WO-A-90/13819
- WO-A-92/21977
- WO-A-95/33996
- US-A- 5 409 832
- US-A- 5 597 532
- US-A- 5 612 870
- US-A- 6 150 178
- US-A1- 2002 061 597

## Description

### Field of the Invention

The field of the present invention is devices for collecting biological samples. In particular, the several embodiments of the present invention provide a device having an absorbent for collection of oral fluids or blood specimens or cells thereon. Several embodiments of the specimen collection devices provide for recordation of identifying information and for division of the sample into separate identifiable portions to permit use of the specimen as law enforcement evidence. Generally, the embodiments of the invention further provide a holder for containing and/or securing the original specimen collection material or paper or absorbent that was used in the actual collection of the biological specimen or sample. The holder permits the original collection paper or absorbent to be processed by automated analysis equipment by securing the collection paper or absorbent in a holder that is structured to permit extraction of a test sample while maintaining the evidentiary requirements necessary for a proper chain of custody.

The invention allows for collecting saliva from the mouth or blood samples from a suspect or mammal or DNA samples while later permitting extraction of portions of the sample collection absorbent for testing while maintaining the chain of evidence and identification of the specimen of saliva or blood.

### Background of the Invention

Increasingly in law enforcement, it is necessary to collect biological samples as evidence of a crime or for use as identifying information of a particular human as is the case of DNA collection from suspects. In the collection of biological specimens, it is necessary to associate information about the subject with the specimen at the time of collection as there is no manner for identifying a biological specimen by simple inspection. Therefore, a useful form of evidence collection device for use with biological specimens will contain, at least, a suspect information portion for recording subject information data thereon.

The use of biological specimens as evidence further requires that the biological specimen be securely associated with the identifying information so as to assure that after collection of the specimen, the collection paper or absorbent cannot be intentionally or inadvertently switched to a different collection paper. At a minimum, a proper evidence collection device or holder should easily and clearly show that tampering was attempted either by damage to delicate indicia on the device or by overt damage to a strongly secured device. It is further beneficial if the evidence collection device can accommodate additional forms of evidence such as the application and storage of fingerprints on the evidence holder.

A particular issue in the collection of the biological sample is that the sample collection is often taken from a living, uncooperative person. Often the sample is to be taken from the mouth of the suspect where a saliva or DNA specimen is needed. In this instance, the collection absorbent used will be attached to a handle or a stick. Once the specimen is on the absorbent, the handle is no longer needed, a present complicating factor in specimen storage and analysis due to the extra bulk and size.

The foregoing issues relate, generally, to a process referred to as evidence "chain of custody." "Chain of custody" encompasses the procedures and documentation used to maintain and demonstrate the chronological history of the evidence. Documentation should include, for example, name or initials of the individual collecting the evidence, each person or entity subsequently having custody of it, dates the items were collected or transferred, agency and case number, victim's or suspect's name, and a brief description of the item. In biological samples, the principles of evidence or sample identification involved in maintaining proper "chain of custody" are especially critical as a fluid or cellular biological sample, once collected onto an absorbent, presents no distinguishing characteristics. This lack of visual characteristics foils any attempt to properly identify such a biological fluid or cellular sample once it has become separated from its identifying information.

Another problem or issue presented in the analysis of biological specimens is the need to extract or transfer the collected sample from the original collection absorbent and onto an alternate medium to permit analysis or testing of the specimen using the analysis equipment that is available in the selected laboratory. Often it is necessary to separate the collection absorbent from its originally obtained identifying information that is directly associated with the original collection absorbent. This separation of specimen from identifying information can lead to mistakes in associating the specimen with the correct subject or suspect or can lead to the "chain of custody" being open to question in court and a failure of proof of a crime. Sample misidentification is a major source of error both in laboratory analysis and in substantiating criminal evidence.

An additional issue associated with the collection of the biological sample is the need to test or analyze the sample for comparison purposes with other specimens. The sample analysis must be conducted using preexisting instrumentation that is not amenable to maintaining the "chain of custody" of a biological specimen absorbent. For example, in automatic sample testing devices originally designed for the insurance testing industry, the standards of assuring the association of a specimen with its identifying information is not as rigorous as is required for evidence "chain of custody."

Therefore, it would be a benefit if a biological sample holder and storage device were available which securely associated the biological specimen absorbent with the subject identifying information, and which permitted removal of any handle portion attached to the collection absorbent, and which was tamper proof or tamper evident, and which provided ease of use for the collection law enforcement officer while in the field. WO 92/21977shows an evidence holder suitable for a biological specimen absorbent collector having a handle with a top and bottom portion, a detent and projection as securing means and a void for the adsorbent collector.

### Description of the Drawings

Preferred embodiments of the invention, illustrative of the best modes in which the applicant has contemplated applying the principles, are set forth in the following description and are shown in the drawings and are particularly and distinctly pointed out and set forth in the appended claims.
Fig. 1 is a top and front perspective view of a hinged specimen holder;
Fig. 2 is a top and front perspective view of the device of Fig. 1 having a collection absorbent inserted therein;
Fig. 3 shows the device of Figs. 1 and 2 with the hinged lid in closed position to capture the absorbent 110 therein and with the absorbent handle torn away from the absorbent 110 by the assistance of cutter 21 ;
Fig. 4 is an exploded view of a modification of the specimen holder of the present invention that may be useful to those seeking to implement the present invention. The modification shows a two-piece specimen holder with the absorbent aligned for insertion therebetween;
Fig. 5 shows the modification of Fig. 4 in assembled relationship with the absorbent captured therein and the handle broken off;
Fig. 6 is an exploded view of yet another embodiment of the specimen collection holder showing the two piece collection holder with the absorbent and handle aligned for insertion and capture therein;
Fig. 7 shows the embodiment of Fig. 6 in assembled fashion with the collection absorbent and handle captured between the two pieces of the holder of the embodiment;
Fig. 8 is a top and side perspective view of an embodiment of a biological specimen collection device with the cover in place over the end of the device;
Fig. 9 is a top and side perspective view of the collection device of Fig. 8 with the cover removed;
Fig. 10 is an exploded view of the collection device of Fig. 9;
Fig. 11 is a top and front perspective view of another embodiment of the specimen holder designed to receive the entire collection absorbent and attached handle and showing the hinged lid 12 aligned for capture of the absorbent 110 by the device;
Fig. 12 shows the embodiment of Fig. 11 fully opened and with the collection absorbent and handle absent to reveal window 24 in bottom portion 14;
Fig. 13 is yet another embodiment of a specimen holder having an information card 175 attached thereto and with the specimen holder portion 150 opened to receive a collection absorbent or paper therein;
Fig. 14 is a top plan view of the embodiment of Fig. 13 showing absorbent 110 captured within window 166;
Fig. 15 shows the reverse side of the embodiment of Fig. 13 and showing window 166 on the reverse side of the embodiment with absorbent 110 captured therein;
Fig. 16 shows a top and right side perspective view of an alternate embodiment of the holder having an information sheet 175 attached thereto, and showing a holder portion 150 which can be subdivided into two portions 210, 215, each containing a portion of the absorbent paper captured within window 166, and each bearing one half of the identical bar code 176c', 176d which matches the identical bar code 176b, 176c and 176;
Fig. 17 is a top front and right side perspective view of a specimen or collection paper holder which may be subdivided into two portions each holding a portion of sample 110a, 110b therein distributed between halves 110, 115;
Fig. 18 is a bottom plan view of a combined sample collection device and holder that may be used for swabbing a blood drop sample from a subject;
Fig 19 is a top plan view of the embodiment of Fig. 18 and showing the absorbent 110 within window 308;
Fig. 20 is a top plan view of an alternate embodiment of a combined specimen collection device and holder showing absorbent 110 extending therefrom;
Fig. 21 shows the collection device of Fig. 20 partially closed and showing absorbent 110 supported on extension or back cover 414;
Fig. 22 shows the embodiment of Fig. 20 fully closed and with back cover 414 and front cover 412 partially folded back from absorbent 110 to expose absorbent 110 for punching of a sample therefrom;
Fig. 23 shows a top plan view of yet another embodiment of a specimen sampling device and holder and showing absorbent paper 110 mounted thereon;
Fig. 24 shows a bottom plan view of the device of Fig. 23;
Fig. 25 shows another embodiment of a collection paper or specimen holder 650 with an information portion 675 attached thereto and adhesive stripper portion 661 aligned for application to holder 650 to capture an absorbent therebetween;
Fig. 26 is a front and right side perspective view of a holder similar to the embodiment of

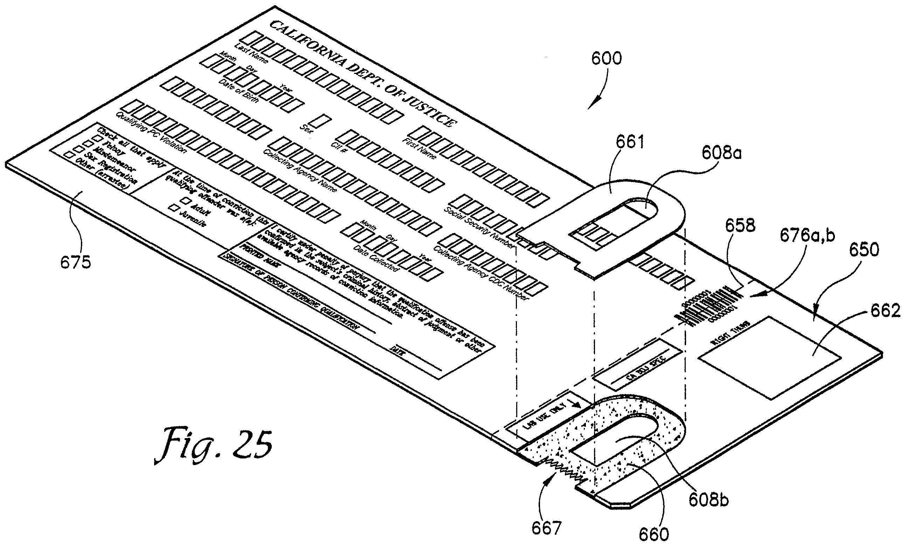

Fig. 25 but having no information card attached thereto;

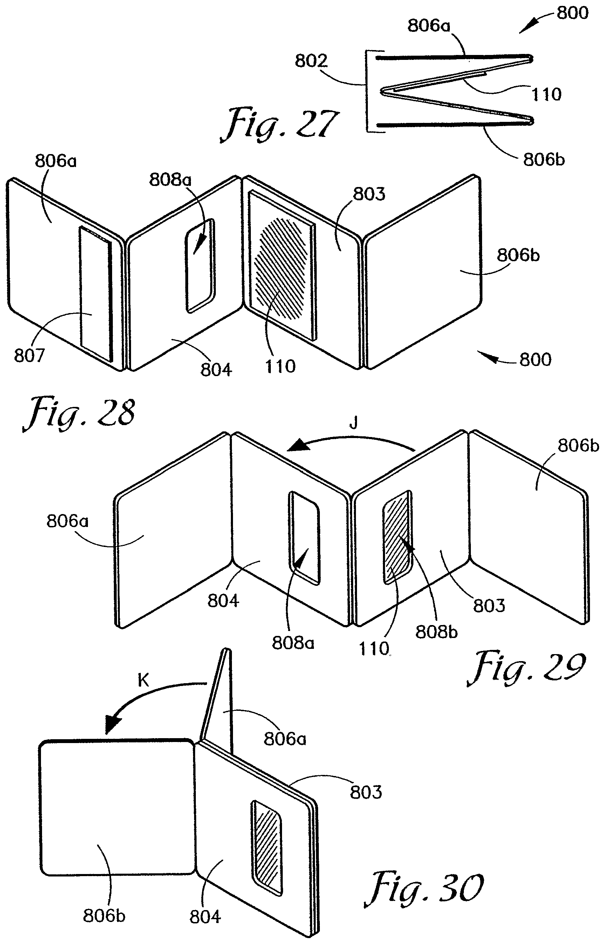

Fig. 27 is a side elevation view of yet another embodiment of a collection paper holder and sampling device and showing absorbent 110 mounted on one side of the card;
Fig. 28 shows the embodiment of Fig. 27 partially expanded to reveal absorbent 110 mounted thereon and window 808a aligned with absorbent 110;
Fig. 29 shows the embodiment of Fig. 27 as it is assembled together by movement of side 803 against 804 along arrow J;
Fig. 30 shows side 803 in contact with side 804 and side 806a being moved toward side 806b along arrow K;

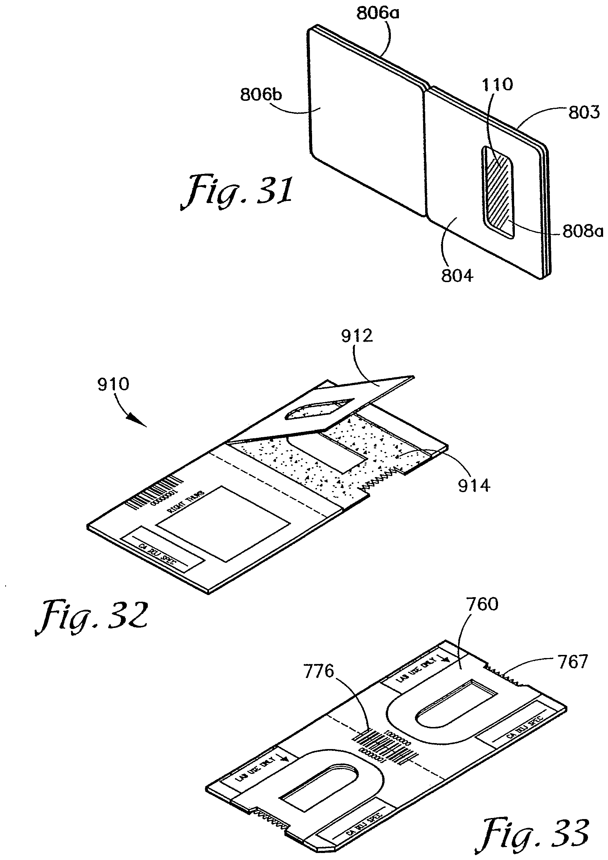

Fig. 31 shows the device of Fig. 27 fully assembled with sides 806a, 806b joined together to form a handle portion for holding the device while a sample is applied to absorbent 110;
Fig. 32 shows a plan view of an embodiment of the present invention having a portion for holding a collection absorbent with a cover portion having an adhesive thereon to permit capture of the absorbent within the device and having a portion for recording of a finger print thereon;
Fig. 33 shows a plan view of an embodiment of the present invention having dual collection absorbent holders each having a cutter and a cover portion having an adhesive thereon to permit capture of the absorbent within the device and having a portion for recording of a fingerprint thereon with the cover show affixed in the figure.

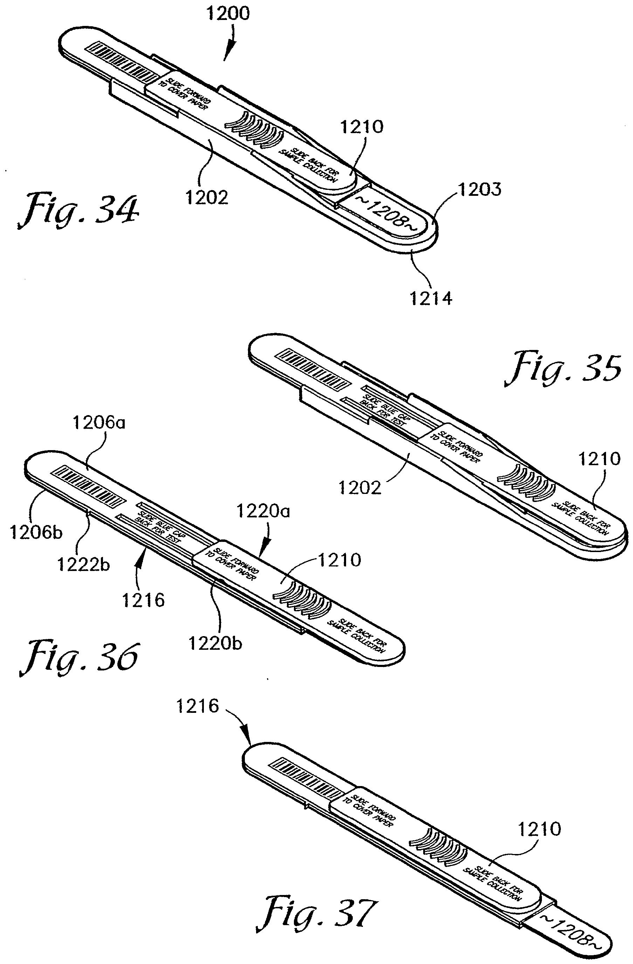

Fig. 34 shows the DNA collection device of the present invention in a front and left side perspective view with the sliding cover positioned rearwardly to expose the collection absorbent for use.
Fig. 35 shows the device of Fig. 34 with the sliding cover moved forward to cover the collection absorbent.
Fig. 36 shows the device of Figs. 34 and 35 with an absorbent handle and sliding cover removed from the support.
Fig. 37 shows the device of Fig. 36 with the sliding cover moved rearward.
Fig, 38 shows the device of Figs. 34 and 35 in exploded perspective view.

### Description of the Preferred Embodiments

The purpose of the various inventive sample holders or specimen/sample carriage devices shown in the present application is to meet collection requirements that allow blood specimen collection or body fluid collection or DNA collection to qualify for secure evidence handling and for chain of custody proof requirements in law enforcement. In particular, in an optimal situation, it is desirable that the sample holder used for adapting the sample or specimen collection device to an automated sampling system incorporate the original specimen collection absorbent and avoid the need for any transfer of the specimen onto a second absorbent or require the transfer of a bar code or other identifying material from the collection absorbent or DNA collector or sampling device onto the sample device holder. It is far more desirable and preferable that the original specimen collection absorbent and the same bar code that is attached to the original sample or specimen collection absorbent or device be inserted into the sample holder and be viewable from within the sample or specimen holder. It also is important that the absorbent or sampling paper surface, while held within the holder, be exposed so that small portions or circles can be punched from the paper for delivery into testing vials for making the DNA determination.

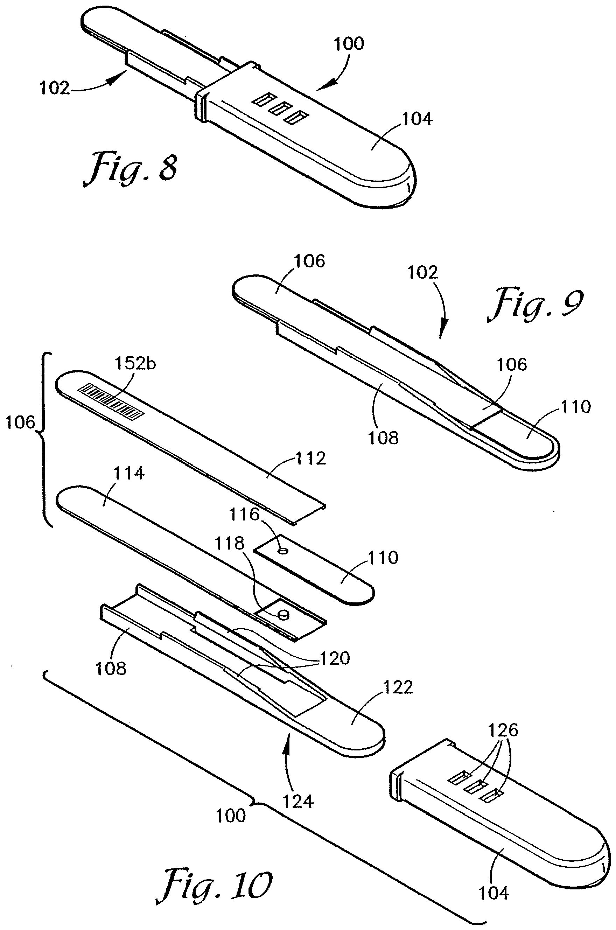

It is also another important feature that the sample holder have a locking feature so that once the sample collection device and/or absorbent is fixed within the holder, it is locked into the holder, and the holder cannot be tampered with or opened without the damage being evident. It is another benefit if the holder for such automated sampling avoids a secondary transfer of the original collection absorbent **110** (Fig. 10) of collector or collection device **106** (Fig. 10) or any destruction of the original sample device **106** and/or collection absorbent **110** and maintains the original collection absorbent **110** (Fig. 10) attached or within its handle and bearing its original bar code marking and other identifying markings. This is desirable to eliminate any mix up between samples due to transfer of the original identifiers associated with the sample during the moment of sample collection onto sample holders used during analysis of the sample. It is another important benefit that separation of the sample from the handle or transfer of bar codes or other identity material be avoided. This is desirable to avoid complication of the chain of custody and to make an unambiguous association between the device that received the subject's blood specimen or went into the subject's mouth to collect the sample and the sample that appears in the laboratory for analysis.

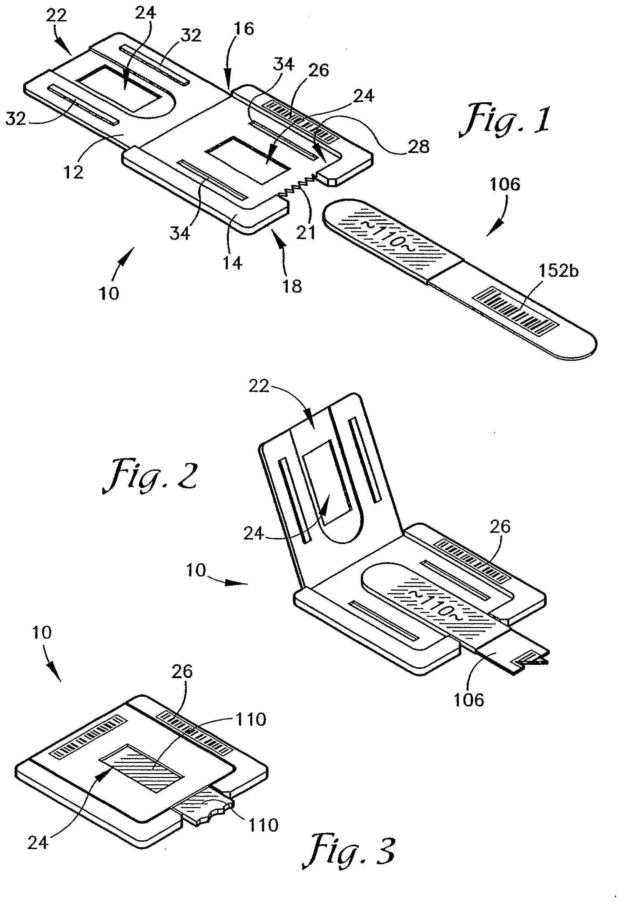

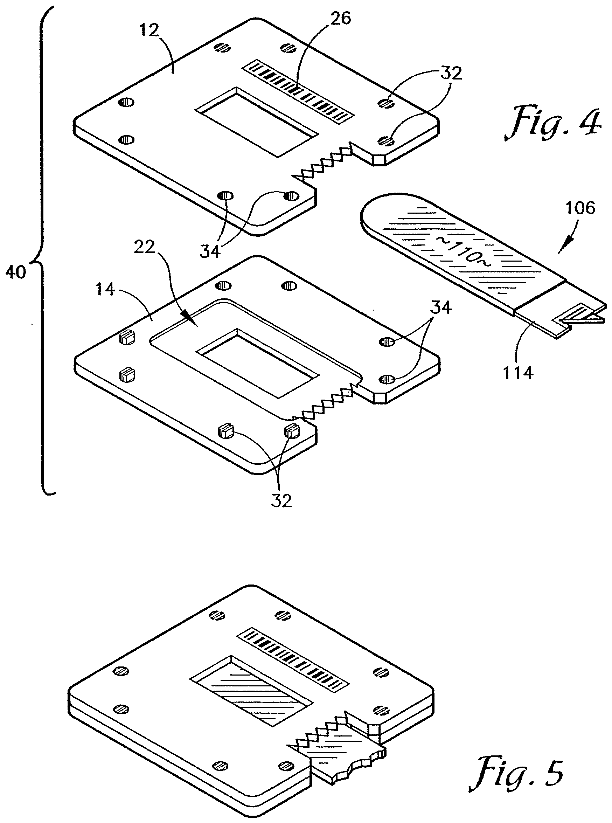

Referring now to Figs. 1-3, a sample carriage device embodiment **10** is shown which allows the paper absorbent **110** of the specimen/sample collector **106** to be inserted into the carriage device 10 and the paper absorbent 110 captured within the carriage device and the paper separated from the collector handle 114 (Fig. 10) by serrated edges 21 on device 10.
Referring to Fig. 1, embodiment 10 is comprised of an upper portion 12 that is connected to a bottom portion 14 by the use of a hinge means or staple connection or fold along back edge 16 to permit top portion 12 to be separable from bottom portion 14 along front edge 18. Front edge 18 includes cutter portion 21 having teeth-like edges or serrations in front edge 18 the purpose of which shall be described hereinafter.
In operation, a specimen or sample collector 106 such as the one shown in Figures 8 -10 can be used with any of the holders shown in Figs. 1-7. Other configurations or shapes of absorbents 110 may be used if the registration track or groove 22 of the sample carriage 10 is reconfigured to accept the alternate absorbent shape. The sample carriage 10 shown in Figs. 1-3 may be operated by removing the handle portion 106 from holder 108 (Fig 10) and inserting collection absorbent or paper 110, having a specimen or sampler thereon, into device 10 such that absorbent or paper 110 is visible within viewing or sample collection area or window 24.
Once the collection paper 110 is positioned so as to be captured within the registration track or groove 22 of holder 10, top portion 12 is pressed against bottom portion 14 to secure absorbent 110 therebetween. Top portion 12 and bottom portion 14 are then held together by a securing means. In device 10, top portion 12 and bottom portion 14 are held together by a frictional fit between top portion 12 and bottom portion 14 as top portion 12 fits into a recessed area 28 of bottom portion 14. Alternatively, or additionally, the securing means may be a post 32 insertable into a detent 34 to lock together top portion 12 and bottom portion 14 as is shown in Figs 4-5 for modification 30 (Fig. 4). Alternative securing means will be apparent to those skilled in the art, means such as glue or tape or a staple or adhesive strip or a peel and stick or release liner or any convenient means of securing the two surfaces together to hold collection absorbent paper 110 within top portion 12 and bottom portion 14 also may be used. When absorbent paper 110 is secured within the holder 10, serration or cutter 21 may be used to separate the paper 110 from handle portion 106 by using the cutter 21 to separate handle 106 from absorbent 110. This then will present sample absorbent paper 110 locked into the device 10 as is shown in Fig. 3 wherein absorbent sample paper 110 is shown by the Crosshatch marks within the window 24 and with the paper now bearing reference numeral 110 to indicate that it is the absorbent sample paper 110 taken from the holder 106.

Once sample paper **110** is fixed within the holder **10,** the paper may then be loaded into an automated sampling device such as an automated sample-punching machine such as a BSD-1000 manufactured in Australia. The automated sampling device will read bar code **26** on top surface **12** of device **10.** A typical automated sampling device will then punch samples from collection paper **110** as it is held within window **24** of holder **10.** It will be appreciated that bar code **26** is bar code **152b** shown on collection device **106** in Fig. 10 and which has been transferred to the holder **10** during the process of capturing collection absorbent paper **110** within holder **10.** Alternatively, a duplicate version of bar code **152b** may be produced and placed on device **10** to serve as bar code **26.**

Referring now to Figs. 4 and 5, another embodiment, device **40,** is shown which is similar in construction to device **10** of Figs. 1-3. In describing device **40,** the same reference numbers will be used in describing structures that are similar to structures found in device **10.** Device or sample holder **40** is comprised of a top or upper portion **12** that is separate from bottom portion **14.** As upper or top portion **12** is fully separable from bottom portion **14,** a securing means is provided to connect upper portion **12** to bottom portion **14** after absorbent **110** has been inserted into registration track or groove **22** of bottom portion **14.** In the embodiment of device **40,** the securing means is post **32** which is inserted into void or detent **34** and which is captured therein. Device **40** also includes a cutter portion **21** with teeth-like edges or serrations that serve to allow the user of device **40** to tear absorbent **110** from handle **114** of collector **106** when absorbent **110** has been captured between upper or top portion **12** and bottom portion **14.**

It will be appreciated by those skilled in the art that devices **10** and **40** may involve the transfer of the identifying bar code **152b** from the handle **106** of the collection device of Fig. 10 to sample holder **10** to provide the bar code shown in the position of bar code **26.** However, it is possible to provide sample holder **10, 40** as a unit that includes a specimen collector such as collector **106,** both of which devices are pre-provided with matching bar codes 26.

It also should be appreciated that the embodiments shown in Figs. 1-5 involve modification of the structure of the device used to collect the sample. Specifically, the handle **114** is separated from paper **110** upon which the sample resides. While the embodiments of Figs. 1-5 do not contain all the preferred features of a preferred embodiment, they will be functional for some purposes in which a chain of custody or evidentiary issues are not as strict as within criminal chain of custody matters.

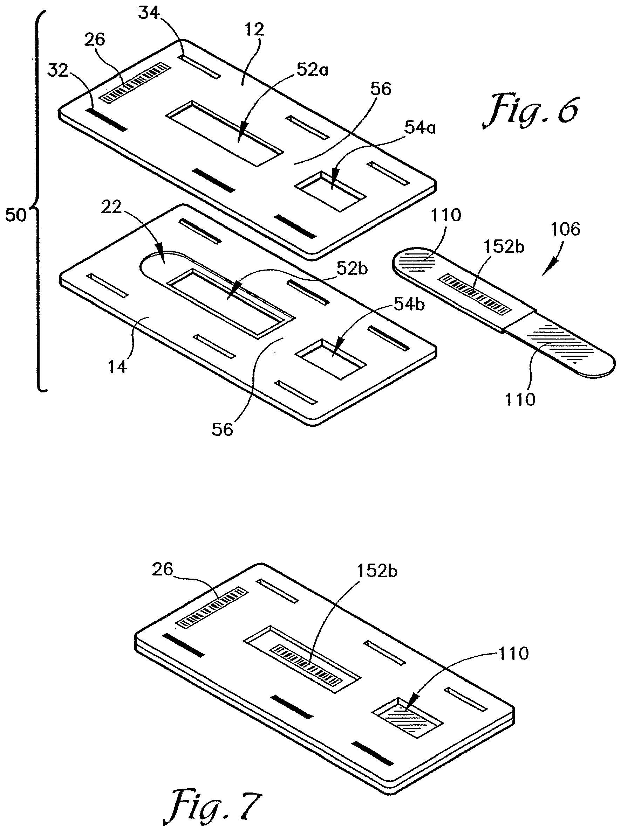

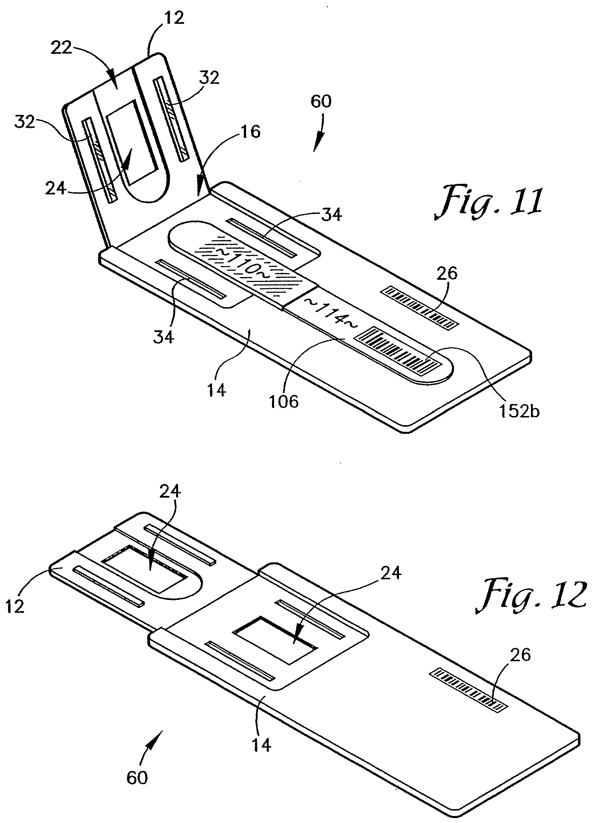

The embodiment, shown in Figs. 6 and 7, now to be described, provides all the preferred objects. Referring now to Figs. 6-7, a specimen holder **50** is shown in which the entire collection handle **114** and collection paper **110** of collection device **106** (Fig. 10) is inserted into the holder **50.** Holder **50** is comprised of an upper portion **12** and a bottom portion **14** which can be superimposed on one another and pressed together to interconnect to capture device **106** (Fig. 12) within registration groove **22** of holder **50.** Top portion **12** and bottom portion **14** are held together, as described for the embodiments of Fig. 1-5, by any useful means of securing the top portion **12** to the bottom portion **14.** Such means may be adhesive tape, staples, ultrasonic fusing of the material together if the holder were plastic, or an arrangement of locking posts and detents can be utilized such as is shown in Figs. 6-7. In the embodiment of Figs. 6 & 7, posts **32** are registerable and insertably lockable into detents **34.** It also will be appreciated that the handle **114** can be shortened, if necessary, to fit into the device by cutting the handle **114** or providing a perforation line that allows breaking handle **114** to shorten it to a length compatible with holder **50.**

In operation, the function of the embodiment **50** of Figs. 6 & 7 is as follows: A handle sample holder **106** having a bar code **152b** and having a collection absorbent or paper **110** attached thereto such as the collection device **106** of Figs. 8-10 of the present application is inserted into bottom portion or half **14** of device **50.** As is shown in Fig. 6, windows **52a, b** and **54a, b** are included on both top portion **12** and bottom portion **14** of holder **50.** A support band **56** bridges windows **52a, b** and **54a, b.** Support band **56** supports device **106** within the holder **50** while allowing the bar code **152b** on device **106** to be viewed and read with a bar code scanner and sample collection portion **110** of device **106** to be exposed and accessible and viewable at all times.

It will be appreciated that during manufacture, bottom portion **12** and top portion **14** of device **50** can be constructed so the top and bottom portions are identical. Thus, the individual inserting device **106** into the halves of the device need not select and match a top portion and a bottom portion. This can be achieved by simply manipulating the closure method so the top **12** and bottom **14** can be the same. In the case of the posts and detents, it would be possible to put all the posts on either the top or the bottom or on one edge of the device, so identical tops and bottoms could be constructed.

In operation, after device **106** has been inserted into holder **50** and top portion **12** connected to bottom portion **14,** the resulting assembly is as shown in Fig. 7. In Fig. 7, device **106** is locked within the compressed together top and bottom halves **12, 14** of device **50** and bar code **152b** of device **106** is visible within window **52a** and collection paper **110** is visible and accessible through window **54a, b.** It will be appreciated that as window **54a** is aligned with window **54b,** a portion of collection absorbent **110** may be removed by use of a punch to extract a sample of collection paper or absorbent **110** for testing. In addition, it will be appreciated that the original bar code attached to sample collection device **106** is still attached to device **106** and is visible through window **52a** of device **50.** Further, if additional or alternate bar code or identification symbols are needed, they may be placed on device **50** as is shown by bar code label **26.**

Referring now to Fig. 11, yet another embodiment of the holder, holder **60,** will be discussed. Holder **60** is comprised of a holder bottom or body portion **14** to which is attached a foldable, closeable top portion or hood portion **12** and which is attached to body portion **14** at hinged edge **16.** Attachment point or edge **16** can be any flexible hinge type of connection between body **14** and hood **12** that permits hingeable opening of portion **12** with respect to body **14.** Alternatively, it will be appreciated by those skilled in the art that portion **12** could be a separate cover from body portion **14,** and the two portions **12** and **14** made connectable by interlocking weld means or post and detent means or other connection means as previously described for the devices shown in Figs. 1-7. Again, the object is to contain a collection device **106** within holder **60** while presenting the identifying bar code **152b** and the sample collection paper or portion **110** visible and available for reading and for the punching of sample disks from collection paper **110.**

In operation, device **60** of Fig. 11 is used as follows. A collection sample device such as device **106** of Figs. 8 -10 is placed on bottom portion 14 so that absorbent **110** covers window **24** on bottom **14** and handle **114** of device **106** is generally flush with the surface of bottom portion **14.** Window **24** permits collection paper **110** to be viewed and paper disks to be punched from collection paper **110** when device **106** is mounted within holder **60.** It will be appreciated that window **24** of top portion **12** of the device **60** has a similar window portion **24** directly opposite and in registration with the window of top **12** and which is in base portion **14.** This alignment of windows **24** permits a paper disk to be punched from collection paper **110** as absorbent paper **110** is held within device **60.** Further, the disk can fall out of holder **60** through window **24** in bottom portion **14** and into testing vial or dish.

It will be appreciated that when top portion **12** is pressed downwardly against base portion **14,** the previously described securing means for securing device **106** within device **60** may be used, and that top portion **12** cannot be opened or separated from base portion **14** without the tampering or the attempt to open being evidenced. In this manner, the chain of custody and evidentiary requirements are retained. Device **106** is adapted for use in an automated sampling machine without the need to separate collection paper **110** from handle **114** or the need to transfer identifying bar code **152b** from device **106** onto an automated sampling holder device.

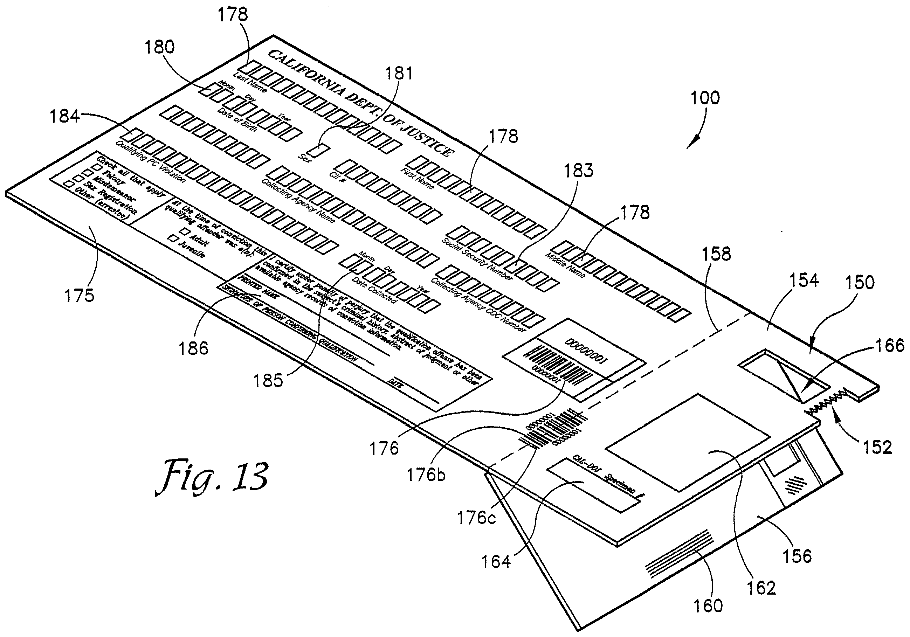

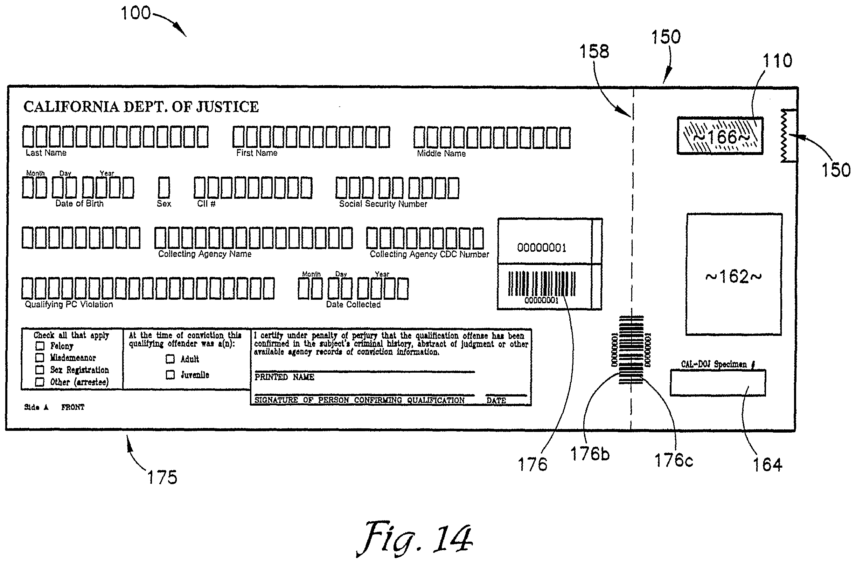

Referring now to Figs. 13 - 15, a collection card **100** is shown having an embodiment of the specimen collection holder **150** attached thereto. The specimen holder **150** may be used alone in addition to being used, as shown, attached to information portion **175.** Card **100** is comprised of an information portion **175** on which may be recorded the name **178,** date of birth **180,** sex **181,** social security number **183,** and other useful information regarding a suspect or convict such as the violation which qualifies for obtaining a biological specimen **184,** and the date of collection **185,** and the signature of the individual certifying that the offense for which the specimen was collected qualified as an offense which permitted the collection of biological information **186,** and for which a blood or fluid or DNA specimen and other evidentiary information is to be obtained. The specimen can be collected in the manner previously described by use of a handle portion **106** having a collection paper **110** attached thereto. The paper may then be inserted into holder **150** which operates in a manner similar to the manner described previously for the embodiment shown in Figs. 1- 5 wherein the collection paper **110** attached to handle portion **106** is inserted into the holder **150** such that the paper is located in window **166.** In the present embodiment, handle **114** is removed through the use of serrations **152** provided with the holder **150.** Specifically, in the embodiment of Figs. 13 - 15, collection paper **110** would be inserted into holder **150** in between upper portion or surface **154** and lower portion or surface **156,** and upper surface **154** is then closed against lower surface **156** in the manner previously described herein to secure surface **154** against surface **156** and capture absorbent sample collection paper **110** therebetween using adhesive strip **160.** Once the surfaces are secured together to contain specimen collection paper **110** therebetween, the cutter or serrations **152** may be used to separate handle **106** (Fig. 10) from collection paper **110.**

In the embodiment of Figs. 13 - 15, bar codes **176** are provided both on information portion **175** and on holder portion **150.** In one embodiment, a bar code **176b, 176c** is provided which spans across both information portion **175** (See, bar code **176b**) and holder portion **150** (See, bar code **176c**) such that if holder portion **150** is separated from information portion **175** by the use of perforation **158,** both portions **175, 150** will contain an identical bar code identification **176** as it is printed to span perforation line **158.**

An additional aspect of evidence that can be obtained by the use of the embodiment of Figs. 13 - 15, is a fingerprint of the suspect or convict that can be placed into fingerprint block **162** that is on holder top portion **154.** By the use of the embodiment shown in Figs. 13 - 15, a law enforcement department can obtain all relevant and necessary information to identify a suspect or convict or other offender by the use of body fluid sample or DNA as well as by conventional forms of identification such as fingerprinting into block **160** and with identifying information placed into information portion **175** and a split bar code **176b, 176c** correlating the physical evidence of holder portion **154** with the suspect information contained on information portion **175.** A separate block **164** for imprinting a state department of justice identifier also is provided.

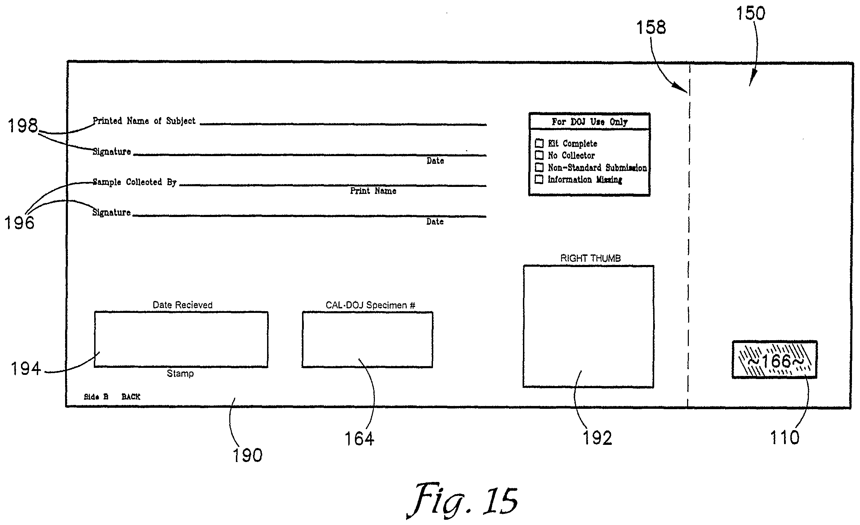

In Fig. 15, the reverse side of embodiment **100** is shown, including the reverse side **190** of information portion **175** and the reverse side **200** of holder portion **150.** On the reverse side of the information portion, areas for marking the date the card **100** was received at various locations **194** is provided, a space for a department of justice specimen number **164,** identification and signature of the collecting agent **196,** the name and signature of the subject **198,** and space for a second fingerprint **192.** The second fingerprint can further serve as a correlating marking proving that the individual whose biological sample and/or finger print appeared in holder **150** also was available to provide the finger or thumb print which was placed on the reverse side **190** of information portion **175.**

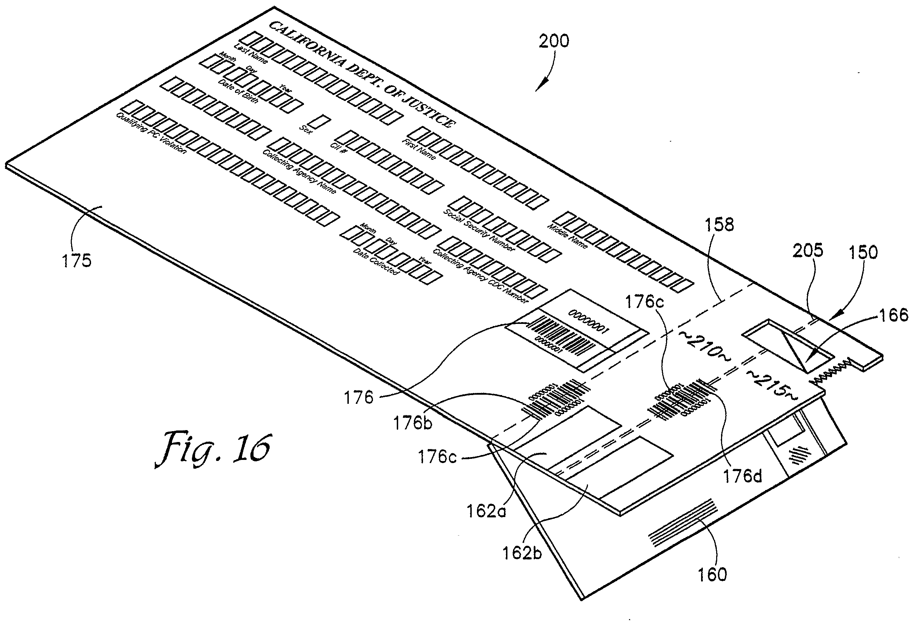

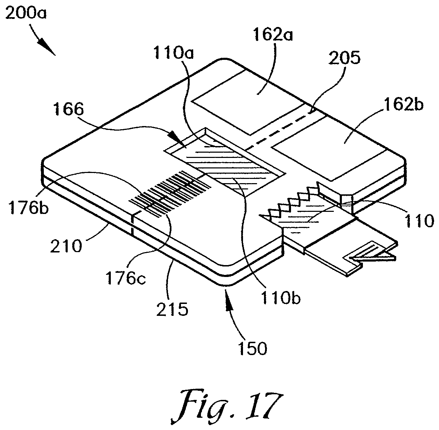

Referring now to Figs. 16 and 17 alternative embodiments **200, 200a** are presented. In the embodiment of Fig. 16, a perforation line **158** is shown in the location described in the discussion of the embodiment of Figs. 13 - 15. In the embodiment of Fig. 16, perforation line **158** allows separation of holder portion **150** from information portion **175** as was the case for the embodiment shown in Figs. 13-15. The embodiments shown in Figs. 16 and 17 also contain a second perforation line **205** that serves to subdivide the sample holder **150,** and the evidence contained thereon, into multiple sample portions **210, 215.** This splitting of sample holder 150 into two sections **210, 215** permits separation of the biological specimen **110** (Fig. 17) and/or fingerprint evidence to be split into to portions. In the case of absorbent **110** (Fig. 17), it can be split into two portions **110a** and **110b**. This splitting permits a portion of the identical biological sample, for example, **110b,** to be sent to a laboratory for analysis while a portion **110a** is retained with the information portion **175** (Fig. 16) of the embodiment.

In the embodiment of Fig. 16, a bar code **176, 176b, 176c, 176c', 176d** is affixed to each portion of the embodiment with some representations of the bar code **176b, 176c, 176c', 176d** spanning two of the sections. As has been previously described, bar code **176b, 176c** is placed across perforation **158** such that a portion of the bar code **176b,** which is fully readable, remains with information portion **175,** and a portion of the bar code **176c,** which is fully readable, is retained with holder portion **150.** In the embodiment shown in Fig. 16, which holder portion **150** can be split into two portions **210, 215** by use of perforation line **205,** a second bar code **176c', 176d** is placed across perforation line **205** to permit identification of both halves of holder portion **210, 215** once perforation line **205** has been used to divide holder portion **150** into two halves **210, 215.** It also will be appreciated that as the holder portion **150** of embodiments **200, 200a** is separable into first and second halves **210, 215** that two fingerprint areas **162a, 162b** are provided on each half **210, 215** of holder portion **150.** It will be appreciated by those skilled in the art that it will be desirable in most cases that bar code **176c', 176d** be identical to bar code **176b, 176c** and to bar code **176.** Alternatively, a separate bar code number for holder portion **215** could be cross-indexed against the bar code used for holder portion **210** as the intent is to be able to match holder portion **210** with holder portion **215** once separation using perforation line **205** has occurred.

It will be appreciated by those skilled in the art that an embodiment similar to those shown in Figs. 1 - 3 and 11 - 12 could be devised in which the hinge connecting the top half to the bottom half is located along the side of the device and parallel to paper **110.** In this configuration, a hinged embodiment could be provided which allows the sample or absorbent **110** to be split into two absorbent portions as is provided for in the embodiments of Figs. 16 and 17.

Now, more particularly referring to the embodiment of Fig. 17, a variation on the embodiment of Fig. 16 is shown in which device **200a** is provided with a perforation line **205** that divides device **200a** into two pieces. A bar code **176b, 176c** is provided which is centered on perforation **205** to provide a bar code **167b, 176c** with a first half **210** having bar code **176b** thereon, and with a second half **215** having bar code **176c** when perforation **205** is used to divide device **200a** into first and second halves. A portion of collection paper **110,** specially **110a**, is allocated to first half **210,** and a second portion of collection paper **110b** is allocated to second half **215** when perforation **205** is used to divide device **200a** into two pieces. If desired, additional evidence regarding the subject person can be provided in the form of fingerprints that would be applied to fingerprint area **162a, 162b.** Device **220a** can be associated with a separate information portion **175** (Fig. 16) or can be attached to an information portion **176** by use of an adhesive.

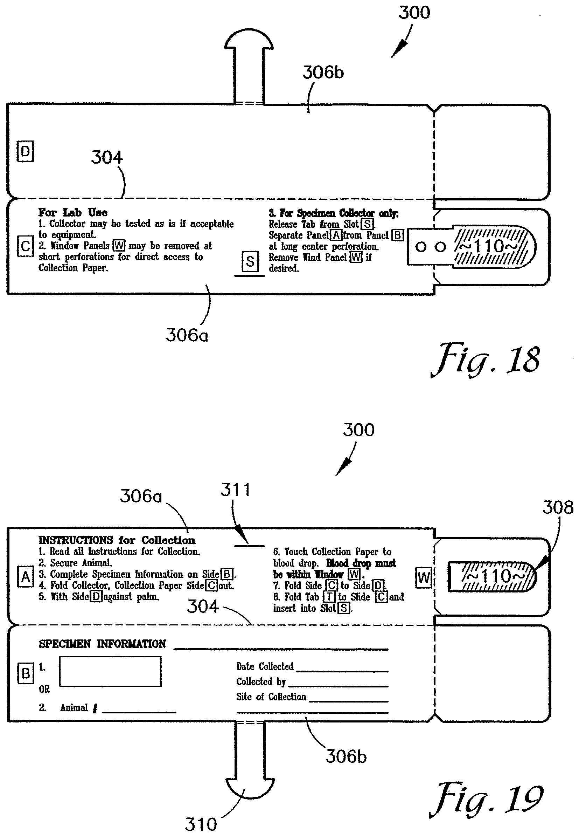

Referring now to Figs. 18 and 19, another embodiment of a specimen collection device is shown in which the collection absorbent or paper **110** is pre-attached to the holder. Referring first to Fig. 18, device **300** is comprised of handle **306a, 306b.** Handle half **306b** may be folded onto handle half **306a** along perforation or fold or crease line **304** which permits handle portion **306b** to cover and protect paper **110** which is at one end of handle portion **306a.** It will be appreciated that information regarding the sample and the individual from whom the sample is taken and the time and other identifying and informational indicia may be recorded on any of the four surfaces of handle **306a, b** as shown in Figs. 18 and 19. Device **300** is provided with a sampling window **308** through which paper **110** is exposed to allow the punching of a specimen of the blood drop or saliva that has been placed onto paper **110.**

In operation, device **300** may be used for obtaining a blood sample from an animal such as by first securing the animal, followed by completion of the specimen information on side **b** of handle portion **306b** to identify the animal. After side **b** of handle portion **306b** has been filled out, handle **306a** is folded against handle portion **306b** such that folded to the outside. This manner of folding will present the whole of collection paper **110** for collection of the specimen with window **308** on the inside of the fold. The user will place side **d** of handle portion **306a** against the palm and swipe paper **110** against the blood drop that is formed where the animal's ear has been pricked. Once sufficient blood has been collected to fill the area that is framed by window **308,** side **d** of handle portion **306b** is folded against side c of handle portion **306a** to place side a of handle portion **306a** and side **b** of handle portion **306b** to the outside at which time tab **310** may be inserted into slots **311** to maintain the device in a closed position. Alternatively, an adhesive strip having a releasable cover on it may be placed on side **d** of handle portion **306b** to permit the device to be closed adhesively.

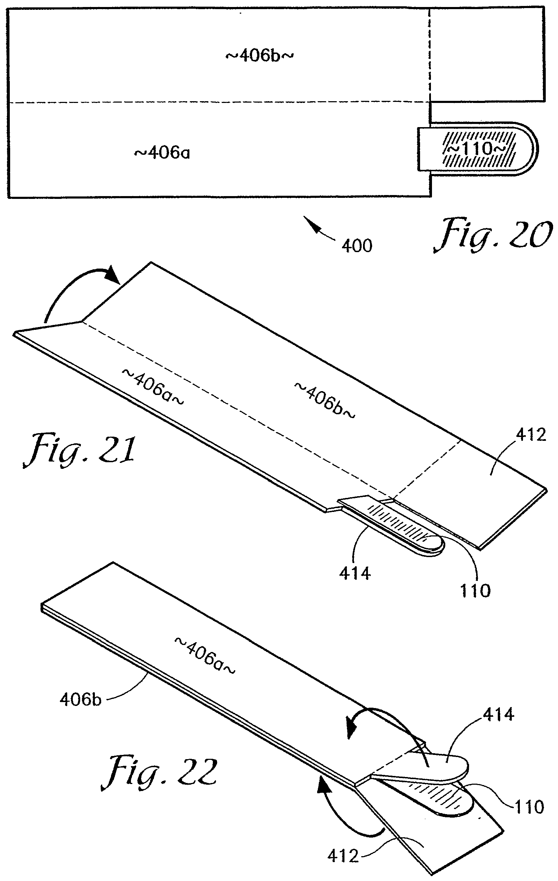

Referring now to Figs. 20 - 22, another embodiment, **400,** similar to the embodiment shown in Figs. 18 and 19. Figs. 20 - 22 showing the folding together of handle **306a** and **306b** together and which is similar to the folding together of handle **306a, b** shown in Figs. 18-19 for embodiment **300.** The embodiment of Figs. 20 - 22 is an embodiment that lacks window **308** (Fig. 19) to provide access to collection paper **110.** Rather, the embodiment of Figs. 20 - 22 provides greater protection for paper **110** by providing a front cover **412** and back cover **414** for paper **110** before and after the sample is taken. In Fig. 22 handle **406a, b** of embodiment **400** is shown in the closed position with front cover **412** separated from paper **110** and back cover **414** separated from paper **110.** Front cover **412** and back cover **414** are made separable from paper **110** to permit paper **110** to be exposed for sample taking and to permit paper **110** to be exposed in the laboratory for punching from paper **110** of a sample for testing purposes. On embodiment **400,** information may be recorded on the outside of handle **406** as shown in Figs. 18 - 19 form device **300.**

When it is desired to use the device shown in Figs. 20 - 22, either front cover **412** or back cover **414** may be folded backwardly to fully expose paper **110** leaving the other cover in place to support paper **110** as it is rubbed against the subject for a DNA specimen collection or used to blot blood for a blood specimen. Once the specimen has been collected, the folded cover **412** or **414** can be replaced to cover and to protect the sample that has been collected onto sample collection paper **110.** It will be appreciated that when covers **412, 414** are in the closed position, they cover and protect collection paper **110.** Alternatively, the sample can first be collected onto paper **110,** followed by the closure of handle portions **406a, b** by folding handle portion **406a** against **406b** to cover and protect collection paper **110** until the sample reaches the laboratory. When the sample reaches the laboratory, front cover **412** and back cover **414** can be torn away from handle **406a, b** thus exposing collection paper **110** for extraction of a sample portion therefrom for use in testing.

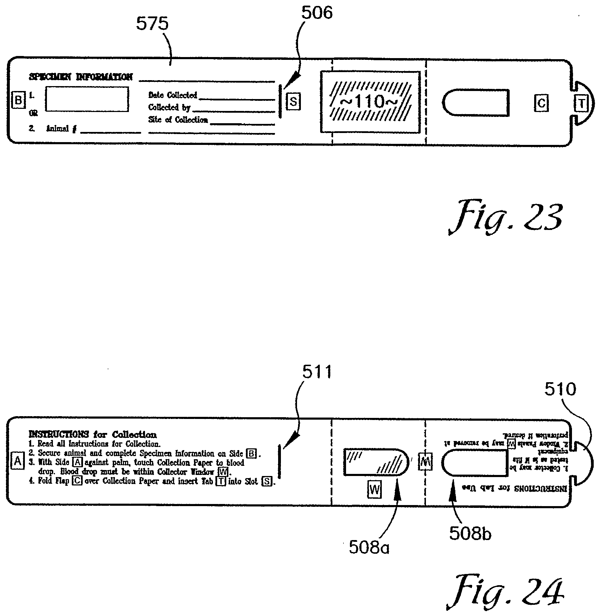

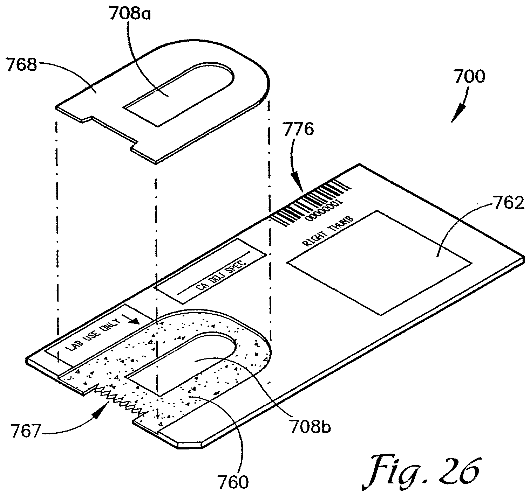

Referring now to Figs. 23 and 24, yet another embodiment of a collection device **500** will be described. Device **500** is provided with a punch window **508a, b** to allow a specimen sample to be punched from specimen collection paper **110.** Device **500** presents a handle portion **506** having an information portion **575** thereon for use in identifying the subject, such as a particular animal. When it is desired to use device **500,** the user fills in the information about the subject animal on information portion **575.** The user then pricks the ear of the animal and touches paper **110** to the drop of blood that is formed on the ear. The best practice in the use of device **500** is to apply sufficient blood so that the paper **110** exposed via window **508a** is fully saturated with blood. In this regard, the blood can be applied to paper **110** from side **B** of handle **506** or from side **A** of handle **506.** Once the blood has been applied to the device, end Portion C is folded along line W and away from side A and against side B. In this manner, end portion C cover paper 110 on side B and paper 110 is then framed on each side of device 500 by window 508a on side A and by window 508b on side B. This allows the operator at the testing laboratory to have a clear, supported field of paper 110 from which to punch a testing sample.
Referring now to Fig. 25, yet another embodiment of the evidence collection device is shown. Device 600 is a combination of an information portion 675 and a specimen holder portion 650. As previously described, information portion 675 is to be filled out at the time the specimen is being acquired. Specimen holder portion 650 contains the various pieces of evidence which are being collected such as a fingerprint in area 662 and an area for insertion of collection paper 110 (not shown) which is placed onto area 660 and to which an adhesive backed curing paper 661 is then applied to secure collection paper 110 to specimen holder 650. It will be appreciated that device 600 contains window 608a, 608b through which the laboratory may punch a testing sample from paper 110. As in previous embodiments of this invention, device 608 is provided with a cutter edge 667 which can be used to separate absorbent paper 110 from handle 114 (Fig. 10). Device 600 further contains bar code 676 that is printed across perforation 658 to provide an identifying bar code on both information portion 675 and specimen holder portion 650.
Referring now to Fig. 26, a device 700 similar to device 600 of Fig. 25 is shown. Device 700 is a specimen holder only which may be affixed to a separate information identification card or may simply be used within the laboratory to hold a specimen for insertion into an automatic testing device. Device 700 is comprised of substantially the same features, as is device 600. A bar code 776 is provided for identification of device 700. A thumbprint may be applied to device 700 area 762 when device 700 is used in the field. A collection paper 110 may be aligned within paper holder area 760 to cover window 708b after which an adhesive securing paper or adhesive label seal 761 is applied to secure paper 110 in holder 700. Adhesive strip 761 is provided with window 708a which allows the laboratory to punch a sample from paper 110 that is secured within device 700. Again it will be appreciated that device 700 is provided with cutter teeth 767 which allows separation of paper 110 from handle 114 (Fig. 10).
**804**. It will be appreciated that device **800** is essentially an elongate rectangle of paper which has been folded to present four panels, to handle panels or portions **806a, 806b** and paper holding panel **803** and window panel **804.** Examination of Fig. 29 shows that the reverse side of panel **803** from that shown in Fig. 28 contains window **808b.** Referring now to Fig. 28, device **800** has been expanded further from the nearly closed position shown in Fig. 27. In Fig. 28, various portions of the device are easily seen. Handle portion **806a** is connected to window panel **804** that is connected to paper holding panel **803** that is connected to handle **806b.** On handle **806a,** an adhesive section with release liner **807** is provided which will allow the securing of handle **806a** to handle **806b** to prepare the device for use. In Fig. 29, device **800** is shown from the reverse face of that shown in Fig. 28. In Fig. 29, it can be observed that absorbent paper **110** is visible through window **808b** in paper holder section **803.** It will also be appreciated that window **808a** and at window **808b** align when panel **803** is brought against panel **804** along Arrow **J.** This alignment of windows **808a** and **808b** provides a space for the laboratory operator to cleanly punch a sample from collection paper **110** without obtaining any other portions of device **800** during the punching process. Referring now to Fig. 30, panel **804** has been positioned against panel **803** and handle portion, or panel **806a,** is about to then be positioned against handle portion **806b.** It will be appreciated that adhesive release liner **807** has been removed so that handle **806a** can be secured to **806b.** Referring now to Fig. 31, device **800** is shown fully assembled with handle portion **806a** adhesively secured against handle portion **806b** and handle **808a** aligned with window **808b** to allow absorbent paper **110** to be exposed for collection and punching purposes. Device **800** is then used in collection devices shown in Figs. 18 - 24 when collecting paper is applied to the pricked ear of an animal or has blood or saliva or other body fluid applied to it to collect biological specimens of the subject or animal for later testing.

In the foregoing description, certain terms have been used for brevity, clearness and understanding; but no unnecessary limitations are to be implied therefrom beyond the requirements of the prior art, because such terms are used for descriptive purposes and are intended to be broadly construed. Moreover, the description and illustration of the inventions is by way of example, and the scope of the inventions is not limited to the exact details shown or described.

Referring now to Fig. 33, an alternate embodiment of the device shown in Figs. 25 and 26 is shown. In the embodiment of Fig. 33, two sample storage portions 760 are shown. The dual sample storage portions allow the collection agency to collect two different specimens (e.g., saliva and blood) from the same subject or duplicate samples (e.g., two saliva samples) from the same subject. As in the devices of Figs. 25 and 26, the specimen absorbent is secured onto portion **760** by application of an adhesive-backed cover paper **661** as previously described.

Referring now to Fig. 32, yet another alternate embodiment **910** is shown in which top layer **912** is shown in a peeled-up position to allow insertion of a collection absorbent **106** therein. Once the absorbent, having the sample thereon has been inserted into the device, the top layer can be pressed against bottom layer **914** to capture the collection absorbent therebetween. In one embodiment, a releasable adhesive is used to secure top layer **912** to bottom layer **914.** Alternatively, a release liner (not shown) can be used to cover a permanent adhesive on bottom layer **914** until it is desired to secure top layer **912** to bottom layer **914** at which time the release liner can be removed to expose the adhesive. The use of a release liner is preferred in situations in which it is desired to permanently secure the collection absorbent into the device **910** and to reveal any attempt to re-open the device to tamper with the absorbent once it is placed into the device.

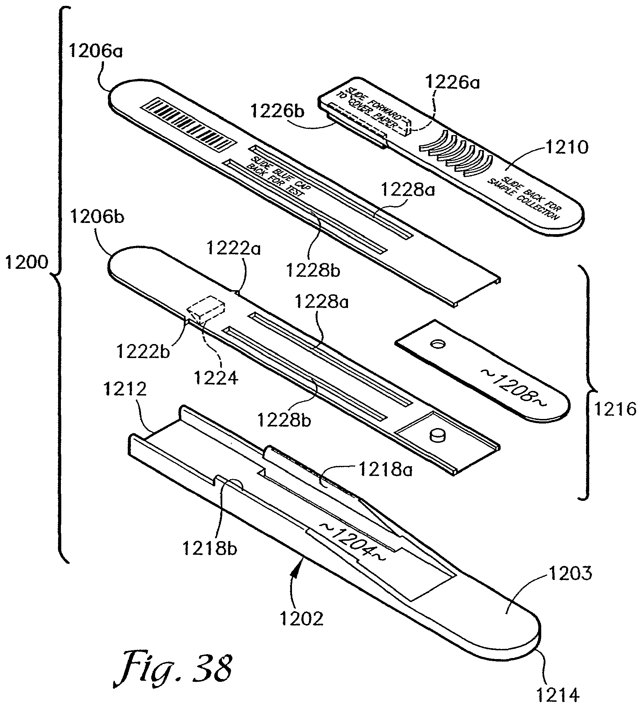

First referring to Fig. 38, an embodiment of the present invention is shown in exploded view so each component comprising the device may be more easily described. DNA collection device **1200** comprises holder or holder portion **1202** having cavity 1204. Cavity **1204** is configured to accommodate handle **1216** and to allow support of DNA collection absorbent **1208** on absorbent support area **1203** at front end **1214** of holder **1202.** Sliding cover **1210** is operably joined to handle **1216** to permit sliding cover **1210** to be moved over absorbent **1208** to protect absorbent **1208** and to be retracted to expose absorbent **1208.** Handle **1216** comprises lower handle portion **1206b** and upper handle portion **1206a** having DNA absorbent **1208** captured therebetween. Hereinafter, this unit of lower handle portion **1206b,** upper handle portion **1206a** and absorbent **1208** will be referred to as handle **1216.**

Holder **1202,** in a preferred embodiment, is configured so handle **1216** may be inserted into cavity **1204** of holder **1202** from rear end **1212** of holder **1202.** Once handle **1216** is entered into holder **1202** from rear end **1212,** handle **1216** then may be pressed forwardly toward front end **1214** of holder **1202** to permit absorbent **1208** to rest upon and be supported by absorbent support area **1203.** As handle **1216** is inserted from rear edge **1212,** and as it is pressed forwardly towards front edge **1214,** outside edges **1220a,b** (Fig. 36) of handle **1216** are pressed underneath and frictionally captured by retaining flanges **1218a, 1218b** of holder **1202.** The forward movement of handle **1216** within holder **1202** is ended when side stop **1222a,b** and bottom stop **1224** protruding from lower handle portion **1206b** contact rear end **1212** of holder **1202.** The frictional capture of handle **1216** by flanges **1218a, 1218b** firmly retains handle **1216** within holder **1202** and positions and retains absorbent **1208** on area **1203** of front end **1214** of holder **1202** during the collection of DNA samples. It will be appreciated, as will be described hereinafter, that the secure retention of handle **1216** on holder **1202** permits the ease of sliding movement of slidable cover **1210** during the operation of the DNA collection device **1200.**

The utility and operation of DNA collection device **1200** now will be described with reference to Figs. 34 - 38. In general, DNA collection device **1200** is provided in two operational forms, the first being shown in Figs. 34 - 35 wherein handle **1216,** having slidable cover **1210** attached thereto, is mounted in holder **1202.** It is in this configuration that absorbent **1208** is resting on absorbent support area **1203** on front end **1214** of holder **1202** to thereby provide support and reinforcement of absorbent **1208** as it is used for the collection of DNA samples from a subject. As described hereinafter, the configuration of Figs. 34 - 35, wherein holder **1202** support handle **1216,** provides for support of absorbent **1208** during collection procedures and allows for the covering and protection of both top and bottom surfaces of absorbent **1208** during precollection, collection, and post-collection procedures. This configuration also allows for moisture to evaporate from absorbent **1208** when the DNA collection procedure has involved a liquid or wet sample.

The second general operational form of device **1200** is shown in Figs. 36 and 37 wherein holder **1202** has been removed from handle **1216** leaving slidable cover **1210** attached to handle **1216.** In this configuration, device **1200** is most conveniently used within the laboratory for manipulation of the handle **1216** during the removal of portions of absorbent **1208** for the performance of clinical testing on any sample collected on absorbent **1208.** The use and operation of device **1200** while in the configuration shown in Figs. 36 and 37 will be described in detail hereinafter.

Again referring to Figs. 34 and 35, the operation of device **1200** with handle **1216** contained in holder **1202** will be described. The configuration of device **1200** as shown in Figs. 34 and 35 is primarily intended for shipping of the device to the field officer or station where a DNA sample will be collected, for actual use of the device during the collection of the DNA sample and then for a return shipment of the device to a clinical laboratory for analysis. Device **1200** is particularly suited to these operations as in Figs. 34 and 35, it can be seen that handle **1216** is contained completely within holder **1202** and is provided with slidable cover **1210** mounted atop handle **1216** as shown and described in Fig. 38. A comparison of Fig. 34 with Fig. 35 shows that in Fig. 34, slidable cover **1210** is positioned or pushed rearwardly to expose absorbent **1208** to view and to use, whereas in Fig. 35, slidable cover **1210** is pushed or pressed forwardly so absorbent **1208** is hidden from view by slidable cover **1210.** Absorbent **1208** is protected from any unintentional and undesired contact with the surroundings by slidable cover **1210** protecting the top surface of absorbent **1208** and holder **1202** protecting the bottom surface of absorbent **1208.** It will be appreciated that during shipping procedures and during operations prior to and after the collection of the DNA specimen, that device **1200** will have slidable cover **1210** pressed forwardly as shown in Fig. 35 to protect absorbent **1208** from any extraneous DNA collection or from incidental damage during transport or manipulation preparatory to use or after use. Such extraneous DNA might be contributed to absorbent **1208** by the incidental brushing of absorbent **1208** on the body of the officer making the sample collection, or on alternate areas of mammalian remains that contain DNA, but which were not the intended area of collection for that sample.

Referring now to Fig. 34, device **1200** is shown with slidable cover **1210** pushed rearwardly to expose absorbent **1208** and to allow collection of a DNA specimen thereon. It will be appreciated by those skilled in the art that with handle **1216** mounted within holder **1202** and slidable cover **1210** withdrawn rearwardly to expose absorbent **1208,** that absorbent **1208** has only a single surface exposed for collection of DNA thereon. Also, it will be appreciated that absorbent **1208** is resting upon area **1203** of holder **1202** so that absorbent **1208** is supported by area **1203** during collection activities. Due to the support of absorbent **1208** by support area **1203** during collection activities, absorbent **1208** may be relatively roughly treated during the collection of a DNA specimen without undue harm to absorbent **1208.**

For example, when collecting a blood specimen from the ground or a roughened surface, the support of absorbent **1208** by support area **1203** allows pressure to be exerted against absorbent **1208** to achieve collection of the dried blood or liquid blood from a rough surface without having to apply support pressure to the back of absorbent **1208.** In such a case, the operator might be inclined to touch absorbent **1208** with their finger or other object to exert pressure on absorbent **1208** that might risk contamination of absorbent **1208** through the addition of extraneous DNA or other substances to absorbent **1208.** Further, it will be appreciated that if a pool of liquid is presented, the option exists to simply remove handle **1216,** having absorbent **1208** attached thereto, from capture within holder **1202** to thereby allow dipping of absorbent **1208** into a liquid specimen. This removal of handle **1216** from holder **1202** would be followed by reinsertion of handle **1216** into holder **1202** for transport of the now collected DNA specimen to a clinical laboratory for analysis. Those skilled in the art will appreciate that once the DNA specimen has been collected on absorbent **1208,** slidable cover **1210** is moved forwardly to cover absorbent **1208.** This covering of the top surface of absorbent **1208** by slidable cover **1210** and the covering of bottom surface of absorbent **1208** by support area **1203** of holder **1202** provides protection of absorbent **1208** from further contact with extraneous matter while allowing air to circulate across the sides and upper face of absorbent **1208** to allow evaporation of any liquid collected on absorbent **1208** and drying of the collected specimen to help avoid spoilage of the collected biological specimen.

Examination of Figs. 34 and 35 also will show that slidable cover **1210** is closely fit between the vertical sides of flanges **1218a, 1218b** to provide frictional resistance to the movement of slidable cover **1210** on handle **1216** when handle **1216** is contained within holder **1202.** In this manner, frictional resistance is provided to the sliding back and forth slidable cover **1210** thereby assisting in the retention of slidable cover **1210** in any position selected by an operator using device **1200** as shown in Figs. 34 and 35.

Referring now to Figs. 36 and 37, the operation of device **1200** in the configuration in which holder **1202** has been removed will be described. While the configuration of device **1200** is shown in Figs. 36 - 37, may be used during the collection of a biological sample in those cases when the attachment of holder **1202** might interfere with the sample collection or make the sample collection more difficult, the configuration shown in Figs. 36 - 37 generally is used within the clinical laboratory. When a biological specimen or sample has been collected on absorbent **1208,** and the entire device shown in Figs. 34 - 35 has been shipped to a clinical laboratory for testing of the specimen, it is necessary that portions of absorbent **1208** be removed or punched from absorbent **1208.** The removal of portions of absorbent **1208** allows a clinical analysis to be performed on those portions removed from absorbent **1208** while retaining a portion of the biological sample on absorbent **1208** as a continuing historical and evidentiary record. When it is desired to remove a portion of absorbent **1208** for clinical testing, handle **1216** is removed from holder **1202** and sliding cover **1210** is pushed rearwardly to expose absorbent **1208** and removal of portions of **1208** can be affected by punching or cutting of a portion of the absorbent from absorbent **1208.**

Examination of Fig. 38 shows that slidable cover **1210** is provided with track followers **1226a,b** which move forwardly and rearwardly within tracks **1228a,b** of handle **1206a,b.** Track followers **1226a,b** are closely fit within tracks **1228a,b** of handle **1206a,b** and provide frictional resistance to the movement of slidable cover **1210** along tracks **1228a,b.** In this manner, frictional resistance is provided to the sliding back and forth slidable cover **1210** when handle **1216** is removed from holder **1202** thereby assisting in the retention of slidable cover **1210** in any position selected by an operator using device **1200** as shown in Figs. 36 and 37.

## Claims

1. A device comprising a specimen holder (150) comprising an upper portion (12) and a bottom portion (14) for connection to said upper portion,
an absorbent (110) and
means for securing said upper portion (12) to said bottom portion (14)-
**characterized in that** said device is a combination evidence specimen absorbent collector and evidence specimen holder into which the absorbent collector is secured to maintain evidentiary chain of custody requirements over a collected evidence while providing unobstructed access to said absorbent collector to permit removal of a portion of said absorbent collector having said collected evidence thereon from the absorbent collector for conducting of evidence analysis on the portion of said absorbent, the combination comprising:
a specimen collector (106) comprising a collector absorbent (110) attached to a handle (114) the handle permitting manipulation of said collector absorbent during evidence collection,
a biological specimen (184) collected on said specimen collector (106),
a cutter (21) formed on said holder (150) said cutter positioned for alignment of said collector absorbent with said cutter for separation of said handle from said collector absorbent by said cutter upon said securing of said absorbent in said holder (150), and
a first void in said upper portion in unobstructed registration with a second void in said bottom portion said first and second voids (52a, 52b) being located on said upper and bottom portions to position said collected biological specimen (184) of said absorbent collector (110) therebetween to expose said collected evidence specimen within said voids to permit unobstructed removal through said registered first and second voids of a sample portion of said collected biological specimen from said absorbent collector;
said means for securing of said upper portion to said bottom portion being tamper-proof.

2. The device as claimed in claim 1 further comprising a subject information portion (175) connected to said holder (150) for recording information about subject from which said biological specimens is collected.

3. The device as claimed in claim 1 wherein said securing means comprises a detent (34) and projection (32) for frictional capture of said projection in said detent.

4. The device as claimed in claim 1 wherein said securing means comprises an adhesive.

5. The device as claimed in claim 1 further comprising an identification indicia (176) on said holder.

6. The device as claimed in claim 1 further comprising a separation line (205) extending across said upper portion and said bottom portion and bisecting said first and second voids (210, 215) for separation of said upper and bottom holders and said absorbent collector having said biological specimen thereon into two halves.

7. The device as claimed in claim 6 further comprising an identification indicia (176b, 176c, 176c', 176d) bisected by said separation line (205).

8. The device as claimed in claim 2 wherein either first or second indicia is transferred to said holder from said absorbent collector.

## Patentansprüche

1. Vorrichtung, die einen Objektträger (150) und ein oberes Teilstück (12) und ein unteres Teilstück (14) zur Verbindung mit dem genannten oberen Teilstück umfasst;
ein Absorbens (110); und
Mittel zum Sichern des oberen Teilstücks (12) an dem unteren Teilstück (14);
**dadurch gekennzeichnet, dass** die Vorrichtung eine Kombination aus Beweisstück-Absorbens-Kollektor und Beweisstück-Objektträger ist, in welchem der Absorbens-Kollektor gesichert wird, um die Beweismittelkettenanforderungen für ein gesammeltes Beweisstück einzuhalten, während ungehinderter Zugriff auf den Absorbens-Kollektor bereitgestellt wird, um die Entfernung eines Teils des Absorbens-Kollektors zu ermöglichen, der das gesammelte Beweisstück von dem Absorbens-Kollektor darauf aufweist, um eine Beweismittelanalyse an dem Teil des Absorbens durchzuführen, wobei die Kombination folgendes umfasst:
einen Probenkollektor (106), einer ein Kollektor-Absorbens (110) umfasst, das an einem Handstück (114) angebracht ist, wobei das Handstück die Manipulation des Kollektor-Absorbens während der Beweissammlung ermöglicht;
eine biologische Probe (184), die auf dem Probenkollektor (106) gesammelt wird;
eine Schneideeinrichtung (21), die an dem Träger (150) ausgebildet ist, wobei die Schneideeinrichtung für eine Ausrichtung des Kollektor-Absorbens mit der Schneideeinrichtung positioniert ist, um das Handstück durch die Schneideeinrichtung von dem Kollektor-Absorbens zu trennen, nachdem das Absorbens in dem Träger (150) gesichert worden ist; und
eine erste Lücke in dem oberen Teilstück in unbehinderter Passgenauigkeit mit einer zweiten Lücke in dem unteren Teilstück, wobei die erste und die zweite Lücke (52a, 52b) an den oberen und unteren Teilstücken angeordnet sind, um die gesammelte biologische Probe (184) des Absorbens-Kollektors (10) dazwischen zu positionieren, um das gesammelte Beweisstück in den Lücken offen zu legen, um eine unbehinderte Entfernung durch die passgenau ausgerichteten ersten und zweiten Lücken eines Probenstücks der gesammelten biologischen Probe von dem Absorbens-Kollektor zu ermöglichen;
wobei das Mittel zum Sichern des oberen Teilstücks an dem unteren Teilstück manipulationssicher ist.

2. Vorrichtung nach Anspruch 1, ferner umfassend ein Subjektinformationsteilstück (175), das mit dem Träger (150) verbunden ist, um Informationen zu dem Subjekt, von dem die biologischen Proben gesammelt werden, aufzuzeichnen.

3. Vorrichtung nach Anspruch 1, wobei das Mittel zum Sichern eine Feststelleinrichtung (34) und einen Vorsprung (32) umfasst, für eine reibschlüssige Aufnahme des Vorsprungs in der Feststelleinrichtung.

4. Vorrichtung nach Anspruch 1, wobei das Mittel zum Sichern einen Klebstoff umfasst.

5. Vorrichtung nach Anspruch 1, wobei diese ferner eine Identifikationsmarkierung (176) an dem Träger umfasst.

6. Vorrichtung nach Anspruch 1, wobei diese ferner eine Trennlinie (205) umfasst, die sich über das obere Teilstück und das untere Teilstück erstreckt und die ersten und zweiten Lücken (210, 215) teilt, um die oberen und unteren Träger zu trennen, und wobei der Absorbens-Kollektor die biologische Probe darauf in zwei Hälften aufweist.

7. Vorrichtung nach Anspruch 6, wobei diese ferner eine Identifikationsmarkierung (176b, 176c, 176c', 176d) umfasst, geteilt durch die Trennlinie (205).

8. Vorrichtung nach Anspruch 2, wobei entweder die erste Markierung oder die zweite Markierung von dem Absorbens-Kollektor zu dem Träger übertragen wird.

## Revendications

1. Dispositif comprenant un porte-spécimen (150) comprenant une partie supérieure (12) et une partie inférieure (14) destinée à être raccordée à ladite partie supérieure,
un absorbant (110) et
un moyen pour fixer ladite partie supérieure (12) à ladite partie inférieure (14),
**caractérisé en ce que** ledit dispositif est un collecteur absorbant de spécimen de preuve et un porte-spécimen de preuve combiné dans lequel le collecteur absorbant est fixé pour respecter les exigences de la chaîne de traçabilité sur une preuve collectée tout en fournissant un accès sans obstruction audit collecteur absorbant pour permettre le retrait d'une partie dudit collecteur absorbant sur lequel se trouve ladite preuve collectée du collecteur absorbant afin de réaliser une analyse de preuve sur la partie dudit absorbant, la combinaison comprenant :
un collecteur de spécimen (106) comprenant un absorbant de collecteur (110) fixé à une poignée (114) la poignée permettant la manipulation dudit absorbant de collecteur pendant la collecte de preuve,
un spécimen biologique (184) collecté sur ledit collecteur de spécimen (106),
un dispositif de coupe (21) formé sur ledit support (150), ledit dispositif de coupe étant positionné pour l'alignement dudit absorbant de collecteur avec ledit dispositif de coupe à des fins de séparation de ladite poignée dudit absorbant de collecteur par ledit dispositif de coupe lors de la fixation dudit absorbant dans ledit support (150), et
un premier vide dans ladite partie supérieure en alignement sans obstruction avec un second vide dans ladite partie inférieure, lesdits premier et second vides (52a, 52b) étant situés sur lesdites parties supérieure et inférieure pour positionner ledit spécimen biologique collecté (184) dudit collecteur absorbant (110) entre eux pour exposer ledit spécimen de preuve collecté dans lesdits vides pour permettre le retrait sans obstruction à travers lesdits premier et second vides alignés d'une partie échantillon dudit spécimen biologique collecté à partir dudit collecteur absorbant ;
ledit moyen de fixation de ladite partie supérieure à ladite partie inférieure étant inviolable.

2. Dispositif selon la revendication 1, comprenant en outre une partie d'information sur le sujet (175) connectée audit support (150) pour enregistrer des informations sur le sujet duquel lesdits spécimens biologiques sont collectés.

3. Dispositif selon la revendication 1, ledit moyen de fixation comprenant un cran (34) et une saillie (32) pour la capture par frottement de ladite saillie dans ledit cran.

4. Dispositif selon la revendication 1, ledit moyen de fixation comprenant un adhésif.

5. Dispositif selon la revendication 1, comprenant en outre une inscription d'identification (176) sur ledit support.

6. Dispositif selon la revendication 1, comprenant en outre une ligne de séparation (205) s'étendant à travers ladite partie supérieure et ladite partie inférieure et coupant en deux parties égales lesdits premier et second vides (210, 215) afin de séparer en deux moitiés lesdits supports supérieur et inférieur et ledit collecteur absorbant sur lequel se trouve ledit spécimen.

7. Dispositif selon la revendication 6, comprenant en outre une inscription d'identification (176b, 176c, 176c', 176d) coupées en deux parties égales par ladite ligne de séparation (205).

8. Dispositif selon la revendication 2, une première ou une seconde inscription d'identification étant transférée sur ledit support à partir dudit collecteur absorbant.
